# EUROPEAN PATENT APPLICATION

(11) **EP 3 401 131 A1**
(43) Date of publication of application: **14.11.2018**
(21) Application number: 16883490.1
(22) Date of filing: 21.12.2016
(51) Int. Cl.: B60G 7/00

(54) **METHOD FOR PRODUCING PROFILES FOR LEAF SPRINGS**

(30) Priority: 04.01.2016 ES 201630001; 14.07.2016 ES 201630969
(71) Applicant: Fundiciones de Vera, S.A., 31780 Vera De Bidasoa (Navarra) (ES)
(72) Inventor: MARKS DIAZ, Antonio, 31780 Bera (Navarra) (ES); FERNANDEZ CURTO, Carlos, 31780 Bera (Navarra) (ES)
(74) Representative: Ponti & Partners, S.L.P
(86) International application number: PCT/ES2016/070924
(87) International publication number: WO 2017/118771

(57) **Abstract**

Procedure for manufacturing profiles for leaf springs. The manufacture of leaf springs formed by one or more tubular profiles, one of them being hollow and the other filled, and combinations of the two, requires a new procedure as well as a reduction in the energy cost of the procedure. This can be achieved with operations involving verification of the profiles, their peeling for detecting cracks, their cutting to the appropriate standards, shaping operations to create mouths and necks at their ends, their forging and upsetting, and punching and drilling of their bases.

## Description

### Object of the Invention.

A procedure of a metallurgical nature that is applied in manufacturing operations for the pieces that allows leaf springs to be manufactured from one or more pieces, from tubular profiles of any type of cross section, preferably, although not exclusively, with a circular section, although they may have other similar sections, including solid circular sections.

### State of the Art.

No type of process is known for manufacturing these types of leaf springs, due to other reasons because these leaf springs are not currently on the market.

Although the various mechanical- and/or metallurgical-type operations that are described below are individually known, the order and combination of said operations, which result in a new product, are not.

### Purpose of the Invention.

One of the purposes of the invention and the recommended manufacturing process is to establish the set of finish operations that enable the parts comprising the leaf spring to be obtained, after the corresponding manufacturing and assembly work; this results in a leaf spring formed by one or more sections, for example, a leaf spring with a complete tubular section, or another with a tubular section, and another with a filled section (rolled steel sheet). This allows the weight of the product to be reduced and facilitates the combination of different materials, placing a material on the side of the cushion with lower strength and price, taking into account that the requests, as far as its application refers to pneumatic leaf springs, are partially cushioned by the suspension system pneumatic cushion and are hence smaller.

The transformation of the previously mentioned sections results in the finish of the sections that make up the leaf spring, with the additional purpose of achieving that the leaf spring formed by one or more parts with said sections fulfils all types of specifications, in terms of mechanical strength, flexibility and dimensions.

Another purpose of the invention is to combine operations, all of which are known individually, but some of them not when it comes to their application to tubular profiles, in order to manufacture a leaf spring that is not known on the market and, therefore, one that is novel not only with regards to its geometrical configuration, but to the properties and characteristics associated with said type of leaf spring, after the recommended manufacturing process, which makes it possible to meet the demands that must be met by vehicle and trailer manufacturers, who otherwise would not be able to meet the requirements of known manufacturing processes.

Another of the purposes of the invention is the natural rounding of the vertices (edges) of the leaf spring profile, even in the case of profiles served from the steelworks with a rounded cross-section, which, when they are rolled, could produce sharp edges, causing the leaf spring to break under service demands. The rounding obtained in the proposed invention minimises the notch effect and allows the product to be designed with a higher nominal tension.

### Description of the Invention.

The purpose of the recommended procedure is to use a tubular profile with a circular or similar cross-section, which is capable of being machined on the outside and inside, and therefore free from internal and external defects, so that, thanks to this machining process, it can be subjected to higher stresses than solid profiles, the firsts of which are obtained by forming a tubular profile for leaf springs of any type of cross-section.

The recommended procedure begins with full verification by means of non-destructive tests on circular section profiles, in order to detect cracks, if any, served by the steelworker, verified by conventional means, thus guaranteeing, thanks to this verification, that there are no cracks in the material delivered, reducing these cracks to a maximum depth of less than 0.3 mm, which is established by the accuracy of this verification.

The entire maximum depth subject to the uncertainty of cracking is subsequently removed by conventional means, through a peeling process, which guarantees that there are no micro-cracks or cracks and that there is no decarburisation in the starting material served by the steelmaker. Tube machining can be carried out both on the outside and on the inside, at the designer's choice when determining the design stresses on the outside and inside walls.

The circular section or similar profile is formed by means of rollers along its entire length, with a new tubular profile being obtained, preferably circular or similar, of variable thickness. The state of the art even allows longitudinal ribs to be added that can serve as reinforcement if the designer deems it necessary. This process involves, on the one hand, the optimisation of the material used for the leaf spring, given that it is a process in which there is no loss of material, as well as a significant reduction in the final weight of the leaf spring to be manufactured. The initially cylindrical profile served by the steelworks, already checked and peeled when necessary, and previously subjected to the previously indicated roll forming process, when necessary, is shaped for the second time in a completely new way using specific tools, to obtain a rectangular type section with rounded edges, in a natural way, i.e. without edges when the starting profile is deformed plastically by the action of a tool, designed in such a way that certain areas of the tube are shaped in a predetermined way, forcing it to adopt a rectangular section with rounded edges.

This radius setting operation allows the designer to obtain constant or variable radii along the longitudinal section, which represents a considerable advantage over the process of rolling constant section profiles, where the radius is reduced by increasing the degree of reduction in the starting section, with it being impossible to prevent sharp edges from forming in the contact zone of the rollers with the profile.

The product obtained through this process, compared to the one obtained through the conventional lamination process, in which even by starting from a profile formed at one of its ends, allows the same rigidity to be obtained, with a fatigue durability equal to or greater than the equivalent solid profile, but when consisting in the case of leaf springs of one or more pieces of equal or different sections, each part of the spring can be made of materials of the same or different characteristics, so that each part can be optimised to obtain the minimum weight supporting the required demands, in the area where these limitations are projected.

The forming process itself, from a circular or similar initial profile to a rectangular profile, ensures the regularity of the formation of the vertices (edges) of the leaf spring, minimising any notch point caused by conventional rolling processes. The described tube can also be either seam or seamless.

The process described above is applied to a starting section profile that is preferably a circular tube in shape and can also be applied to solid sections, even if this involves much higher forming energies.

In a general and totally conventional way, the tube shape forming, technical treatment, machining, assembly and palletising operations are applied to the manufacturing process described above.

Other details and characteristics will become apparent in the course of the following description, in which reference is made to the fillings that are attached to this report, in which they are shown for non-exhaustive illustrative purposes, with the leaf spring being able to be manufactured in any type of suitable material and in any size suitable to the requirements established by the vehicle manufacturer.

### Description of the figures.

Below is a list of the different parts of the invention, which can be identified in the figures by means of the corresponding numbers: (10) stretched circular section profile, checked and peeled, (11) profile resulting from cutting the profile (10) to predetermined dimensions, (12) profile resulting from forming the profile already cut (11) by rollers, (13) profile after heating and flaring the first end (19) of the tube (12) to obtain the desired opening (23), (14) profile with double punching or drilling of the faces (20) of the profile (13), (15) profile resulting from heating of the area of the holes (21), of the profile (14), and subsequent shaping of the cup (22) by means of lateral filling, (19) end of the profile (12), (20) face of the mouth (23), (21) hole, (22) cup, (23) mouth at the end of the profile (13), (24) neck, (25) second end of the profile (15), (26) profile after heating and flaring the second end (25) of the tube (15) to obtain the desired mouth (27), (27) flattened mouth, (28) shape adopted by the flattened mouth (27) when forming the profile (26), (31) rectangular section profile and rounded edges and with the curved geometry obtained from the radius and geometry forming process, (32) profile obtained from (31) after crushing the end (28) forming the flattened mouth (29), (33) profile obtained from (32) drilling holes (35) in the flattened mouth (29), (34) flattened end mouth with holes (35), (35) holes, (36) right end, (37) profile end (31).

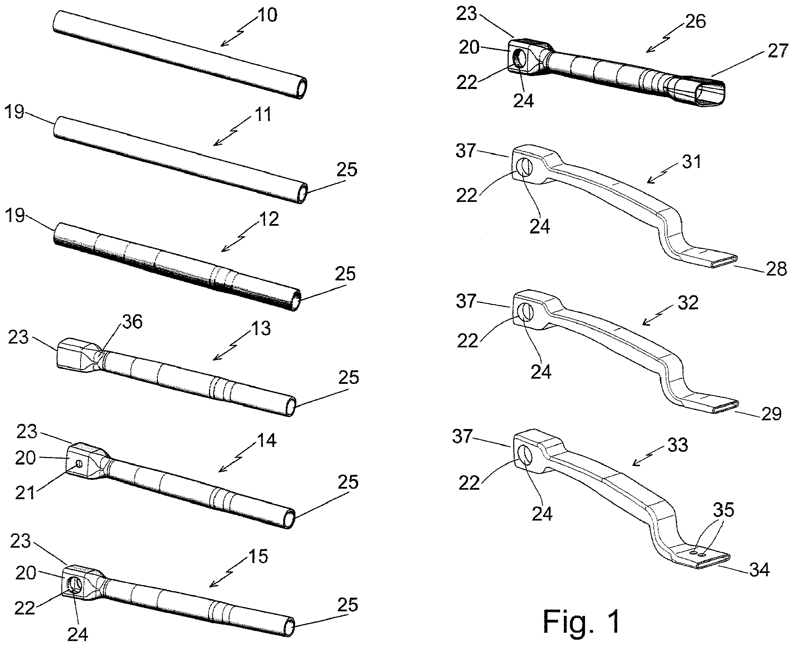

Figure 1 is a diagram of the different operations comprising the manufacturing process of profiles for leaf springs with one or more arms. In this case, the process of obtaining the one-piece tubular leaf spring was represented by the profiles resulting from the different operations of the process.

### Description of an embodiment of the Invention.

In one of the preferred embodiments of the invention, the recommended procedure has been designed for the obtaining of tubular profiles by means of already known operations, except for the conformation of the peeled tube as an application, but whose combination is totally novel due to the results obtained with the corresponding advantages and includes the following operations:
- Verification of the profiles (10) of the circular section for detecting cracks.
- Peeling of the profiles (10), incorporating starting cracks detected in the previous operation.
- Cutting of the profiles (10) obtained by means of the operations prior to the necessary measurements, resulting in the profiles (11) according to the appropriate standards (11) with ends (19) and (25).
- Forming of the peeled profile (11) until a circular or similar section of varying length thickness is obtained, through forming with rollers, resulting in the formed profile (12).
- Forming of the ends (19) and (25) of the profile (12) as described to obtain mouths and/or necks in the case in which the design so requires, which consists of one or more forging and upsetting operations of the profiles (12), with the opening of one mouth (23) at one of the ends of the profile (12), resulting in the profile (13).
- Double punching or drilling of two opposing bases or faces (20) from the mouth (23) located at the end (19) with heating to facilitate the formation of the neck (24) of the cup (22), resulting in the profiles (15), (26), successively. These operations ensure a mirror finish on the end of the inner faces of the necks, meaning that no further machining is needed.
- Heating of the opposite end (25) in order to open the section of the opposite end by upsetting to obtain a flattened cup (27), resulting in the profile (26).
- Forming of the profile (26) having circular or similar section, transforming it into a profile with a rectangular or similar section (31), ensuring the setting of rounded vertices, in such a way as to ensure the natural and homogeneous radius of the edges in all or part of the length of the profile and obtaining the required geometry of the leaf spring.

The manufacturing process object of the invention begins with the verification of the tubular profiles (10) with a circular or similar section, supplied from a steel mill, both to guarantee the constant thickness in the walls of said profile from the outset, and to detect the lack of cracks or, in the case that there are cracks, to verify their nature and maximum depth, the nature of the material (composition) requested, in order to ensure that it is of the contracted quality and complies with the specifications demanded.

After checking the starting profiles (10) described above, a minimum thickness of 0.3 mm is removed by peeling, to ensure that there are no cracks, leaving the tubular profiles (10) to be cut to the required lengths of each standard.

The cutting of the profiles (10) gives rise to the tubular profiles (11) of the left (19) and right (25) ends, which are then subjected to an initial forming operation with the help of rollers, which changes the diameter and/or thickness of the initial profile (11) in whole or in part, in a variable manner in the longitudinal direction, resulting in the profile (12).

Starting from the profiles (12) and according to the specifications assigned to the pieces, it is necessary to transform the ends (19) and (25) of the profile by means of a second forming operation, according to the needs of each case, to obtain, for example, a mouth (23) at the right end with the corresponding necks (36), for which one or more operations of forging and upsetting of the profiles (12) are required, to obtain a larger opening of said mouth (23) at said end (19); the final result of which is the profile (13).

The mouth (23) at one of the ends (19) of the tubular profile (13) for the subsequent coupling of a bearing surrounded by the corresponding bushing, can be obtained, as described above, from a tube by means of a conventional forming process, which, unlike conventional forming operations, requires much less energy than that required for a solid profile, as the hollow tube provides sufficient clamping and is comparatively lighter in weight than the conventional solution, achieved by the formation of an eyelet resulting from the rolling at that end.

Depending on the purpose of the profile (13), in addition to the mouth (23), the punching or drilling of the mouth (23) previously obtained at the end (19) may be required. To do this, it is necessary to warm up the holes (21) in order to form cups (22) presented by the necks (24) on the opposite sides of the holes (20), which have the appropriate surface for the subsequent fixing of the bearings, as well as a cup (27) at the end (25) opposite the other end (19), resulting in a transformation of the profile configuration according to Figures (14), (15), (26).

The filling of the mouth (23) or mouthpiece for the formation of a broadened end, for the coupling of a bearing (see profile (31)) is carried out by means of a low energy process of forming and heating and allows a final finish to be obtained of the contact surface (circular cover) or neck (24) not shown in Figure 1, for the insertion of an integrated bearing and the corresponding bushing around this bearing without the need to add a machining operation.

As described in the previous paragraph, the proposed solution allows for the integration of a slightly flattened cup-shaped widening (27) at the opposite end (25) of the profile (26), for the support and reinforcement above the cup (27), after its successive conformations (28), (29) and (34) of a cushion, forming part of a pneumatic suspension system.

This cup (27) can be formed for this purpose by means of low energy processes compared to those required for flattened solid profiles, given that the widening of the cup (27) naturally expands the material by means of a final crushing operation, obtaining the cup (29) that can be seen in the profile (32).

The level of widening in the flattened cup (27) reached in the profiles (31) and subsequent ones allows the plate between the leaf spring and the cushion of a conventional leaf spring to be completely eliminated.

As it is a thin-walled tubular section, we refer to the cup (27) at the ends (25); any subsequent operation on the profiles (31) and subsequent ones allows low transformation energy deformations to be obtained, to integrate all types of elements such as fillings, threads and similar in the cup (27).

In the case shown, the tube (26) undergoes an austenization process, followed by a forming operation in a press, using tools specially designed to obtain the rectangular shape with radii of the cross-sections until the profile (31) is reached, on the one hand, and to adopt its shape with rounded edges, on the other hand, of different sizes (section) and wall thickness in a predetermined way in certain areas of the tube, with their curvature being able to be changed as can be seen in the profile (31) gradually and by means of punching or subsequent drilling to obtain the holes (35) in the cup (22) already completely flattened, but leaving the mouth of the profile (28) slightly open.

Starting from the still cylindrical profile (26), except in its ends where the mouth (23) has been properly machined and the cup (27) has been shaped in a completely new way, by means of the necessary tools changing the circular cross-section until the profile (31) is obtained, whose cross-section is rectangular in shape, with the right end (36) fully prepared to receive the bearing in the enlarged hole (22).

Simultaneously to the process shown, the tube, after subjected to hot forming, is put into a tempering bath, then passed to a tempering furnace to give it the final hardness, strength and ductility specified by the designer, obtaining a profile equal in geometry to (31).

After tempering, the rectangular section profile (31) is subjected to additional forming operations at its end (28), such as crushing of the mouth (28) to form the mouth (29) shown in the profile (32). Additional filling and punching operations can be integrated into this operation as shown in the mouth (34) of the profile (33) .

Finally, when it comes to the profile (33), other operations are integrated such as blasting, which can be carried out on the outside or on the outside and inside (33), depending on the durability requirements of the design.

Subsequently, other operations can be incorporated such as surface coating, component assembly, etc.

As a consequence of the nature of the procedure described above, it is possible to divide the leaf spring into two sections, and the product obtained by the recommended procedure is a tubular product. For certain applications, it would be possible to carry out part of the cold forming process, with the consequent drastic reduction in the energy used in the forming process.

The cold transformation process provides a considerable increase in mechanical properties, without the need for subsequent heat treatment, except for stress relief in a low temperature tempering furnace.

This invention has been sufficiently described in correspondence with the attached figures. It is understandable that it may be modified as many times as possible, as long as the essence of the invention, which is summarised in the following claims, is not altered.

## Claims

1. **PROCEDURE FOR MANUFACTURING PROFILES FOR LEAF SPRINGS**, being formed by one or more arms, manufactured from a tubular profile, **characterised by** the fact that this manufacturing process comprises the following operations:
- Verification of the profiles (10) of circular section for detecting cracks greater than 0.3 mm.
- Peeling of the profiles (10) to eliminate any cracks of less than 0.3 mm that can't be detected in the previous operation.
- Cutting of the peeled profile (10) obtained by the operations prior to the necessary measurements, resulting in the peeled and cut profile (11) with ends (19) and (25).
- Forming of the profile (11) by means of rollers, until a circular or similar section of varying length thickness is obtained, resulting in the shaping profile (12).
- Forming of the ends (19) and (25) of the profile (12) to obtain mouths and/or necks in the case in which the design so requires.
- One or more forging and upsetting operations of the formed profile with variable thickness (12), with the opening of one mouth (23) in one of the ends of the profile (12), resulting in the profile (13).
- Double punching or drilling of two opposing bases or faces (20) from the mouth (23) located at the end (19) with subsequent heating around the holes (21) to facilitate the formation of the neck (24) of the cup (22) obtained by a filling process resulting in the profile being drilled (15), (26), (31), (32) and (33) successively.
- Heating of the opposite end (25) to open the section of the opposite end by means of an upsetting to form the widened and flattened mouth (27), resulting in the profile (26).
- Forming of the profile (26) of circular section or similar, transforming it into a profile with a rectangular section or similar (31).

2. **PROCEDURE FOR MANUFACTURING PROFILES FOR LEAF SPRINGS** according to claim 1, **characterized in that** the manufacturing process starts with the verified tubular profiles (10) circular section or similar served from a steel, ensuring the constant thickness in the walls of said profile, as well as the absence of cracks greater than 0.3 m.m, the nature of the material (composition).

3. **PROCEDURE FOR MANUFACTURING PROFILES FOR LEAF SPRINGS** according to the claim 1, **characterized in that** after verification of the tubes (10) proceeds to eliminate cracks less than 0.3 m.m. by a peeling operation, leaving the tubular profiles ready for the cutting operation.

4. **PROCEDURE FOR MANUFACTURING PROFILES FOR LEAF SPRINGS** according to claim 1, **characterized in that** following said operation of receiving the tube verified (10) resulting in the profile (11), proceeds to cut the profiles (10) to the measurements desired with the formation of left ends (19) and right (26).

5. **PROCEDURE FOR MANUFACTURING PROFILES FOR LEAF SPRINGS** according to claim 1, **characterized in that** the profile (11), cut to the required length, is subjected to a forming operation by means of rollers and, the diameter is modified and/or initial thickness of said tubes, resulting in the profile (12).

6. **PROCEDURE FOR MANUFACTURING PROFILES FOR LEAF SPRINGS** according to claim 1, **characterized in that** the tube (11) after being cut to standard measurements is subjected to a second forming operation resulting from said operations the tube (12), which subsequently and in order to open a mouth (23) at the end (19) by one or several operations the forging and upsetting of said tube (12) resulting in the tube (13), in which the mouth (23) has been widened and the neck has been formed (36).

7. **PROCEDURE FOR MANUFACTURING PROFILES FOR LEAF SPRINGS,** according to Claim 1, **characterised in that** in the mouth (23) at one end (19) of the tubular profile for the coupling of a bearing surrounded by the corresponding bushing, a tube is obtained through a process of punching, heating and low-energy filling with the formation of a cup (22) with opposite faces (20), each having a neck or cover (24) providing sufficient surface area for the attachment of a bearing.

8. **PROCEDURE FOR MANUFACTURING PROFILES FOR LEAF SPRINGS,** according to claim 1, **characterized in that** within the same procedure the tube (15) is subjected to one or more upsetting operations to open at the end (25) of said tube (15) a cup (27) slightly flattened, resulting in tube (26) consisting of a mouth (23) at the end (19) and, a cup slightly flattened (27) at the opposite end (25).

9. **PROCEDURE FOR MANUFACTURING PROFILES FOR LEAF SPRINGS,** according to claim 1, **characterised in that** the flattened cup-like widening (27) at the opposite end (25) which, after its successive conformations, reaching the flattened cup (34), allows support and strengthening to be provided above the flattened cup (27) of a cushion (237), forming part of a pneumatic suspension system.

10. **PROCEDURE FOR MANUFACTURING PROFILES FOR LEAF SPRINGS,** according to claims 1, 8 and 9, **characterized in that** as it is a thin-walled tubular section of the cup (27), and by subsequent operations such as threaded stuffing allows to obtain deformations of low transformation energy to integrate in said cup (27) all kinds of elements, such as embossments, thread integration and the like.

11. **PROCEDURE FOR MANUFACTURING PROFILES FOR LEAF SPRINGS,** according to claim 1, **characterised in that** the profile (26) is subjected to a process of austenization, followed by a forming operation in a press, by means of tools specially designed to obtain, on the one hand, the rectangular shape with radios of the cross-sections and, on the other hand, to adopt the geometry of profiles (31) and (32).

12. **PROCEDURE FOR MANUFACTURING PROFILES FOR LEAF SPRINGS,** according to claim 1, **characterised in that**, in parallel, the rectangular cross-section profile (31), after hot forming, is placed in a tempering bath and then passed into a tempering furnace to give it the specified final hardness, strength and ductility, with the profile with the geometry of the rectangular cross-section profile (31) being obtained.

13. **PROCEDURE FOR MANUFACTURING PROFILES FOR LEAF SPRINGS,** according to claim 1, 11 and 12, **characterised in that** when the process has reached the rectangular cross-section profile (31), other successive operations are integrated into it, such as the crushing of the widened mouth to form the flattened mouth (29), increasing the area available for supporting the pneumatic cushion, as well as the possibility of integrating additional drawing and punching operations as represented by the flattened mouth (34) of the flattened mouth profile (33), or local crushing to locally seal the tubular section around the holes (35).

14. **PROCEDURE FOR MANUFACTURING PROFILES FOR LEAF SPRINGS,** according to claims 1 and 13, **characterised in that** the blasting process, which can be carried out on the outside, or on the outside and inside, is used to achieve the flattened mouth profile (33), depending on the durability requirements of the design.

15. **PROCEDURE FOR MANUFACTURING PROFILES FOR LEAF SPRINGS,** according to any of the above claims, **characterised in that**, depending on the cross-section of the profiles, cold forming is carried out in part of the operations.

## Amended claims

### Amended claims under Art. 19.1 PCT

1. **PROCEDURE FOR MANUFACTURING PROFILES FOR LEAF SPRINGS,** being formed by one or more arms, manufactured from a tubular profile, **characterised by** the fact that this manufacturing process comprises the following operations:
- Verification of the profile (10) of circular or similar section for detecting cracks.
- Peeling of the profile (10) to eliminate any cracks.
- Cutting of the profile (10) obtained by the operations prior to the necessary measurements, resulting in the peeled and cut profile (11) with ends (19) and (25).
- Forming of the profile (11) by means of rollers, until a circular or similar section of varying length thickness is obtained, resulting in the shaping profile (12).
- Forming of the ends (19) and (25) of the shaping profile (12) to obtain mouths and/or necks in the case in which the design so requires.
- One or more forging and upsetting operations of the formed profile with variable thickness (12), with the opening of one mouth (23) in one of the ends of the profile (12), resulting in the forged profile (13).
- Double punching or drilling of two opposing bases or faces (20) from the mouth (23) located at the end (19) with subsequent heating around the holes (21) to facilitate the formation of the neck (24) of the cup (22) obtained by a filling process resulting in the profile being drilled (15), (26), (31), (32) and (33) successively.
- Heating of the opposite end (25) to open the section of the opposite end by means of an upsetting to form the widened and flattened mouth (27), resulting in the profile (26).
- Forming of the profile (26) of circular section or similar, transforming it into a profile with a rectangular section or similar (31).

2. **PROCEDURE FOR MANUFACTURING PROFILES FOR LEAF SPRINGS** according to claim 1, **characterized in that** the manufacturing process starts with the verified tubular profiles (10) circular section or similar served from a steel, ensuring the constant thickness in the walls of said profile, as well as the absence of cracks greater than 0.3 mm., the nature of the material (composition).

3. **PROCEDURE FOR MANUFACTURING PROFILES FOR LEAF SPRINGS** according to the claim 1, **characterized in that** after verification of the tubes (10) proceeds to eliminate cracks less than 0.3 mm. by a peeling operation, leaving the tubular profiles ready for the cutting operation.

4. **PROCEDURE FOR MANUFACTURING PROFILES FOR LEAF SPRINGS** according to claim 1, **characterized in that** the profile (11), cut to the required length, is subjected to a forming operation by means of rollers and, the diameter is modified and/or initial thickness of said tubes, resulting in the profile (12).

5. **PROCEDURE FOR MANUFACTURING PROFILES FOR LEAF SPRINGS** according to claim 1, **characterized in that** the tube (11) after being cut to standard measurements is subjected to a second forming operation resulting from said operations the tube (12), which subsequently and in order to open a mouth (23) at the end (19) by one or several operations the forging and upsetting of said tube (12) resulting in the tube (13), in which the mouth (23) has been widened and the neck has been formed (36).

6. **PROCEDURE FOR MANUFACTURING PROFILES FOR LEAF SPRINGS,** according to claim 1, **characterised in that** in the mouth (23) at one end (19) of the tubular profile for the coupling of a bearing surrounded by the corresponding bushing, a tube is obtained through a process of punching, heating and low-energy filling with the formation of a cup (22) with opposite faces (20), each having a neck or cover (24) providing sufficient surface area for the attachment of a bearing.

7. **PROCEDURE FOR MANUFACTURING PROFILES FOR LEAF SPRINGS,** according to claim 1, **characterized in that** within the same procedure the tube (15) is subjected to one or more upsetting operations to open at the end (25) of said tube (15) a cup (27) slightly flattened, resulting in tube (26) consisting of a mouth (23) at the end (19) and, a cup slightly flattened (27) at the opposite end (25).

8. **PROCEDURE FOR MANUFACTURING PROFILES FOR LEAF SPRINGS**, according to claim 1, **characterised in that** the flattened cup-like widening (27) at the opposite end (25) which, after its successive conformations, reaching the flattened cup (34), allows support and strengthening to be provided above the flattened cup (27) of a cushion (237), forming part of a pneumatic suspension system.

9. **PROCEDURE FOR MANUFACTURING PROFILES FOR LEAF SPRINGS**, according to claims 1, 7 and 8, **characterized in that** as it is a thin-walled tubular section of the cup (27), and by subsequent operations such as threaded stuffing allows to obtain deformations of low transformation energy to integrate in said cup (27) all kinds of elements, such as embossments, thread integration and the like.

10. **PROCEDURE FOR MANUFACTURING PROFILES FOR LEAF SPRINGS,** according to claim 1, **characterised in that** the profile (26) is subjected to a process of austenization, followed by a forming operation in a press, by means of tools specially designed to obtain, on the one hand, the rectangular shape with radios of the cross-sections and, on the other hand, to adopt the geometry of profiles (31) and (32).

11. **PROCEDURE FOR MANUFACTURING PROFILES FOR LEAF SPRINGS,** according to claim 1, **characterised in that**, in parallel, the rectangular cross-section profile (31), after hot forming, is placed in a tempering bath and then passed into a tempering furnace to give it the specified final hardness, strength and ductility, with the profile with the geometry of the rectangular cross-section profile (31) being obtained.

12. **PROCEDURE FOR MANUFACTURING PROFILES FOR LEAF SPRINGS,** according to claim 1, 10 and 11, **characterised in that** when the process has reached the rectangular cross-section profile (31), other successive operations are integrated into it, such as the crushing of the widened mouth to form the flattened mouth (29), increasing the area available for supporting the pneumatic cushion, as well as the possibility of integrating additional drawing and punching operations as represented by the flattened mouth (34) of the flattened mouth profile (33), or local crushing to locally seal the tubular section around the holes (35).

13. **PROCEDURE FOR MANUFACTURING PROFILES FOR LEAF SPRINGS**, according to claims 1 and 12, **characterised in that** the blasting process, which can be carried out on the outside, or on the outside and inside, is used to achieve the flattened mouth profile (33), depending on the durability requirements of the design.

14. **PROCEDURE FOR MANUFACTURING PROFILES FOR LEAF SPRINGS,** according to any of the above claims, **characterised in that**, depending on the cross-section of the profiles, cold forming is carried out in part of the operations.
